# EUROPÄISCHE PATENTSCHRIFT

(11) **EP 0 480 976 B1**
(45) Veröffentlichungstag und Bekanntmachung des Hinweises auf die Patenterteilung: **13.04.1994**
(21) Anmeldenummer: 90910677.5
(22) Anmeldetag: 25.06.1990
(51) Int. Cl.: F16D 23/06, F16H 61/18

(54) **RÜCKSCHALTSICHERUNG**
DOWNSHIFT SECURING DEVICE
SECURITE DE RETROGRADATION

(30) Priorität: 01.07.1989 DE 3921770
(43) Veröffentlichungstag der Anmeldung: 22.04.1992
(73) Patentinhaber: ZF FRIEDRICHSHAFEN Aktiengesellschaft, 88038 Friedrichshafen (DE)
(72) Erfinder: BADER, Josef, D-7990 Friedrichshafen 1 (DE)
(74) Vertreter: Raue, Reimund
(86) Internationale Anmeldenummer: EP9001006
(87) Internationale Veröffentlichungsnummer: WO9100439

(56) Entgegenhaltungen:
- DE-C- 2 936 009
- DE-C- 3 013 856
- GB-A- 1 314 383
- US-A- 4 420 993
- US-A- 4 901 835
- Derwent s abstract, No. 86-26 909/04,SU 1 165 835, publ. woche 8604 (CHELYABINSK POLY)

## Beschreibung

Die Erfindung betrifft eine Rückschaltsicherung für mehrgängige mechanische Schaltgetriebe nach dem Oberbegriff von Anspruch 1.

Eine solche Rückschaltsicherung ist aus der DE-C-30 13 856 bekannt und hat sich insbesondere in Schaltkupplungen von Bereichsgruppen, die in mehrgängigen mechanischen Schaltgetrieben angeordnet sind, bewährt. Die bekannte Rückschaltsicherung ist jedoch auf relativ hohe Fliehkräfte, die in Verbindung mit hohen Drehzahlen und damit mit hohen Fahrgeschwindigkeiten auftreten, angewiesen.

Es ist Aufgabe der Erfindung, eine Rückschaltsicherung der beschriebenen Gattung weiterzuentwickeln. Insbesondere soll diese auch bei geringen Fahrgeschwindigkeiten und damit geringen Drehzahlen des Synchronkörpers zuverlässig und im Bereich geringer Drehzahldifferenzen wirken. Darüber hinaus soll sie einfach aufgebaut sein und keinen zusätzlichen Bauraum in der Schaltkupplung benötigen.

Diese Aufgabe wird mit den kennzeichnenden Merkmalen von Anspruch 1 gelöst.
Infolge der Kombination eines einfachen zylinderförmigen Sperrstiftes mit einem Fliehgewicht, das in Form eines Segmentes in einer in Umfangsrichtung sich erstreckenden Aussparung des Synchronkörpers begrenzt radial beweglich gelagert ist, ergibt sich eine sehr einfache Gestaltung der Rückschaltsicherung bei einer gleichzeitig großen möglichen Masse im Bereich des Segmentes. Gerade die große Masse sichert die zuverlässige Wirkung der Rückschaltsicherung auch bei geringen Drehzahlen. Die Ringfedern sind in der Herstellung besonders einfach und in der Wirkung infolge ihrer Gestaltung leicht abstimmbar. Werden nur zwei Verriegelungselemente angeordnet und über nur eine Feder gehalten, ergibt sich ein sehr geringer Aufwand für die Rückschaltsicherung. Da das Fliehgewicht sich in einer Aussparung des Synchronkörpers in Umfangsrichtung erstreckt, wird seine Masse groß und kann durch einen Überstand in axialer Richtung leicht vergrößert werden, ohne daß die axiale Erstreckung der Schaltkupplung vergrößert werden muß. Mit der Anordnung einer nach radial außen offenen Rille am Fliehgewicht ist eine besonders einfache Montage der Ringfeder möglich, ohne daß die Funktion derselben beeinträchtigt wird. Ist die Abbiegung der Ringfeder an beiden Enden so lang, daß sie in die in Umfangsrichtung sich erstreckende Aussparung für das Fliehgewicht hineinragt, werden neben dem Fliehgewicht bei sehr hohen Geschwindigkeiten auch die Federenden in der Aussparung gefangen. Über den axialen Überstand ergibt sich als zusätzlicher Vorteil noch ein am Synchronkörper anliegender Bund, der neben dem Sperrstift die radiale Führung der Verriegelungselemente verbessert und damit ein Verkippen des Fliehgewichts verhindert.

Aus der DE-C-29 36 009 ist ein Fliehgewichtssperrhebel bekannt, der auch in der Führungsmuffe der Schaltkupplung angeordnet ist. Der Fliehgewichtssperrhebel ist aber schwenkbar angeordnet und erfordert hohe Aufwendung für die Herstellung und für die Unterbringung der Rückstellfeder und des Sperrhebels in der Führungsmuffe (Synchronkörper). Weiter ist aus der DE-U-70 24 355 (GB-PS 13 14 383) eine Verriegelungseinrichtung bei einem Wechselgetriebe bekannt, die das Einschalten des Rückwärtsganges so lange verhindert, wie die Kraftübertragungswelle nicht im wesentlichen stillsteht. Die Sperrung erfolgt über Bolzen, die als Fliehgewichte wirken und von einer Ringfeder in der radial innenliegenden Stellung gehalten werden. Die Sperreinrichtung ist aber nicht in einer synchronisierten Schaltkupplung angeordnet und benötigt auch zusätzlich axialen Bauraum.

Die Erfindung ist nicht auf die Merkmalskombination der Ansprüche beschränkt. Für den Fachmann ergeben sich weitere sinnvolle Kombinationsmöglichkeiten von Ansprüchen und einzelnen Anspruchsmerkmalen aus der Aufgabenstellung.

Weitere Einzelheiten der Erfindung werden anhand von Zeichnungen und Ausführungsbeispielen erläutert. Es zeigen:
- Fig. 1: einen Teilschnitt eines mehrgängigen mechanischen Schaltgetriebes im Bereich der Doppelschaltkupplung für den R-Gang und den 5. Gang;
- Fig. 2: einen Teilschnitt in Achsrichtung der Doppelschaltkupplung mit der Darstellung der Rückschaltsicherung;
- Fig. 3: einen Teilschnitt quer zur Achse durch den Synchronkörper mit der Darstellung der Verriegelungselemente.

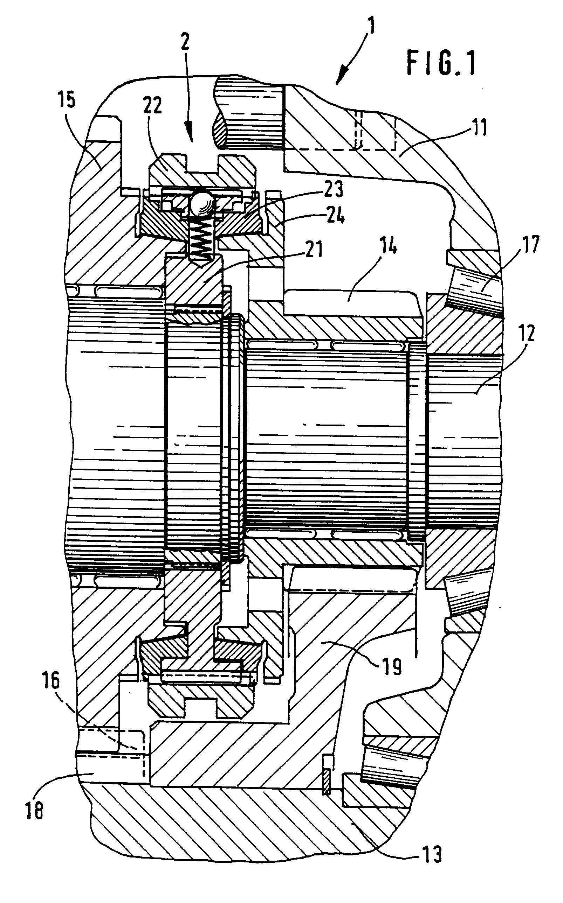

In dem Teilschnitt nach Fig. 1 - Ausschnitt aus einem Getriebe - ist in einem Getriebegehäuse 11 eine Abtriebswelle 12 und eine Vorgelegewelle 13 über Kegelrollenlager 17 gelagert. Auf der Vorgelegewelle sind in diesem Ausschnitt die Zahnräder 18, 19 drehfest angeordnet, und auf der Abtriebswelle 12 sind die Zahnräder 14, 15 axialfest jedoch drehbar gelagert. Der Synchronkörper 21 der Schaltkupplung 2 ist dreh- und axialfest auf der Abtriebswelle 12 angeordnet und trägt über eine Verzahnung drehfest, jedoch axial verschiebbar die Schiebemuffe 22. Zwischen Synchronkörper 21 und den Zahnrädern 14 und 15 sind beidseitig noch Synchronringe 23 und Kupplungskörper 24 in bekannter Weise angeordnet. Außerhalb dieser dargestellten Ebene befindet sich zur Drehzahlumkehr im Rückwärtsgangradzug der Zahnräder 15 und 18 noch das Rückwärtsgangrad 16.

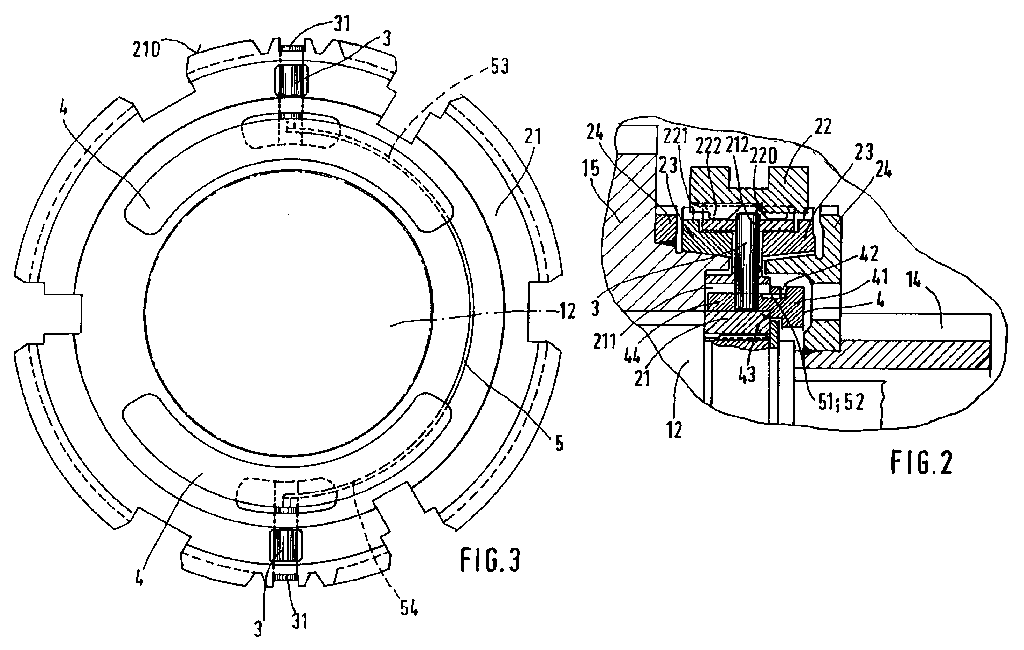

In dem Teilschnitt nach Fig. 2 sind gleiche Teile von Fig. 1 auch gleich bezeichnet. So ist auf der Abtriebswelle 12 der Synchronkörper 21 dreh- und axialfest angeordnet, während die Räder 14 und 15 drehbar auf dieser Welle gelagert sind. Mit den Zahnrädern 14 und 15 sind die Kupplungskörper 24 fest verbunden und die Synchronringe 23 sind in bekannter Weise am Synchronkörper 21 in Mitnahmeverbindung mit Relativbewegung angeordnet. Die Schiebemuffe 22 kann axial im Synchronkörper in der Verzahnung 222 verschoben werden. Im Synchronkörper ist weiter das Verriegelungselement mit dem Sperrstift 3 und dem segmentförmigen Fliehgewicht 4 in der Sperrstiftführung 212 und in der Aussparung 211 geführt. Das Fliehgewicht 4 hat einen Bund 41 mit einer nach radial außen gerichteten Rille 42 für die Lagerung der Ringfeder 5, wobei der Bund 41 wie auch der Schaft 44 sowohl einen Großteil der Federenden 53 und 54 wie die abgebogenen Enden 51 und 52 in der nach außen offen stehenden Rille 42 aufnimmt.

In dem Querschnitt nach Fig. 3 ist 12 die Abtriebswelle und 21 der Synchronkörper, in dem sowohl die Sperrstifte 3 wie auch die /Fliehgewichte 4 gelagert sind. Die Ringfeder 5 hält die Verriegelungselemente 3, 4 in der radialen inneren Stellung, wobei die Federenden 53, 54 in der aus Fig. 2 bekannten Rille 42, die in den jeweiligen Bund 41 der Fliehgewichte 4 sich befinden, angeordnet ist. In dieser Stellung sind die Kopfteile 31 der Sperrstifte 3 gegenüber der Mantelfläche 210 des Synchronkörpers 21 zurückstehend. Über die Masse der Fliehgewichte 4 mit dem jeweiligen Bund 41 und der Sperrstifte in Verbindung mit der Vorspannung und der Dimensionierung der Feder 5 kann die Drehzahl, in der die Rückschaltsicherung zur Wirkung kommen soll, fein abgestimmt werden. Die Rückschaltsicherung nach den Fig. 2 und 3 wirkt wie folgt: Bei Stillstand der Abtriebswelle bzw. bei den noch zulässigen Drehzahlen derselben ist die Rückschaltsicherung außer Eingriff, wie nach den Fig. 2 und 3 dargestellt. Da der Sperrstift 3 und das Fliehgewicht 4 fest verbunden sind, bewegt sich mit ansteigender Drehzahl und damit ansteigender Fliehkraft das Fliehgewicht 4 und damit der Sperrstift 3 nach radial außen und greift in eine Nut 221 an der Schiebemuffe 22 ein. Nunmehr kann die Schiebemuffe in Richtung z. B. des Rückwärtsganges infolge des Anschlages 220 an der Schiebemuffe nicht mehr axial bewegt werden, während die Gegenrichtung z. B. nach Gang 5 frei und eine synchronisierte Schaltung in den 5. Gang nicht behindert ist. Über die radial äußere Begrenzung der Aussparung 211 im Synchronkörper 21 wird sowohl der Schaft 44 des Fliehgewichtes 4 wie auch das um 90° abgebogene Ende 51, 52 der Feder 5 bei hohen Drehzahlen gefangen. Sinkt die Drehzahl auf die vorher festgelegte Drehzahlmarke ab, gibt der Kopfteil des Sperrstiftes den Anschlag 220 der Schiebemuffe 22 wieder frei, so daß eine synchronisierte Schaltung in den tieferen Gang, z. B. in den Rückwärtsgang, möglich ist. Die Schiebemuffe ist also unterhalb der festgelegten Drehzahl über die Verzahnung 230 in beiden Richtungen für eine Verschiebung frei. Geführt wird das Fliehgewicht über die Sperrstifte 3 in der Sperrstiftführung 212 des Synchronkörpers 21 wie auch über die Anschläge 43 des Bundes 41 vom Fliehgewicht, die sowohl nach radial außen wie radial innen gegenüber dem Schaft 44 des Fliehkraftsegmentes überstehen.

Diese Erfindung ist nicht auf das dargestellte Ausführungsbeispiel begrenzt. So ist es z. B. auch möglich, die Führung der Verriegelungselemente 3, 4 durch die Verlängerung der mit den Fliehgewichten 4 fest verbundenen Sperrstifte 3 nach radial innen zu verbessern. Die Führung 212 der Sperrstife 3 im Synchronkörper 21 würde damit verlängert. Auch die Befestigung der Sperrstifte 3 in den Fliehgewichten 4 könnte über die abgebogenen Enden 51, 52 der Ringfeder 5 erfolgen, wenn diese in den Fliehgewichten 4 fixiert und in den Sperrstiften 3 eingreifen würden.

### Bezugszeichen

- 1: Getriebe
- 11: Getriebegehäuse
- 12: Abtriebswelle
- 13: Vorgelegewelle
- 14: Zahnrad
- 15: Zahnrad
- 16: Rückwärtsgangrad
- 17: Kegelrollenlager
- 18: Zahnrad
- 19: Zahnrad
- 2: Doppelschaltkupplung
- 21: Synchronkörper
- 210: Mantelfläche
- 211: Aussparung
- 212: Sperrstiftführung
- 22: Schiebemuffe
- 220: Anschlag
- 221: Nut
- 222: Verzahnung
- 23: Synchronringe
- 24: Kupplungskörper
- 3, 4: Verriegelungselemente
- 3: Sperrstift/Sperrbolzen
- 31: Kopfteil
- 4: Segmentförmiges Fliehgewicht
- 41: Bund
- 42: Rille
- 43: Anschläge
- 44: Schaft
- 5: Ringfeder
- 51: abgebogenes Ende der Ringfeder
- 52: abgebogenes Ende der Ringfeder
- 53: Federende
- 54: Federende

## Patentansprüche

1. Rückschaltsicherung für mehrgängige mechanische Schaltgetriebe (1), die in Schaltkupplungen mit Synchronisiereinrichtungen angeordnet ist und verhindert, daß bei unzulässig hohen Drehzahlen des abtriebsseitigen Teils einer Schaltkupplung (2) diese geschaltet wird, wobei die Schaltkupplung (2) aus einem Synchronkörper (21) und einer auf diesem axial verschiebbaren jedoch drehfest angeordneten Schaltmuffe (22) sowie Synchronringen (23) und Kupplungskörpern (24) besteht und im Synchronkörper (21) Verriegelungselemente (3, 4) vorgesehen sind, die fliehkraftabhängig die axiale Bewegung der Schiebemuffe (22) über einen an dieser mindestens an einer Seite angeordneten Anschlag (220) begrenzen und in ihrer radial innenliegenden Position über eine Feder (5) so gehalten werden, daß sie in dieser Stellung aus der Mantelfläche (210) des Synchronkörpers (21) nicht herausragen, während sie in ihrer durch die Fliehkraft bewirkten radial äußeren Position mit einem Kopfteil (31) über den Anschlag (220) an der Schiebemuffe (22) deren axiale Bewegung sperren, dadurch **gekennzeichnet**, daß jedes Verriegelungselement (3, 4) aus einem im Synchronkörper (21) in radialer Richtung geführten Sperrstift (3) und einem segmentförmigen Fliehgewicht (4) besteht, das jeweils in einer in Umfangsrichtung sich erstreckenden Aussparung (211) des Synchronkörpers (21) begrenzt radial beweglich geführt wird, daß der Sperrstift (3) mit dem Fliehgewicht (4) fest verbunden ist, und daß die Feder, die die Verriegelungselemente (3, 4) in der radial inneren Stellung hält, eine Ringfeder (5) ist.

2. Rückschaltsicherung nach Anspruch 1, dadurch **gekennzeichnet**, daß zwei Verriegelungselemente (3, 4) gegenüberliegend im Synchronkörper (21) angeordnet sind und über nur eine Ringfeder (5) in der nicht gesperrten Stellung radial innen gehalten werden.

3. Rückschaltsicherung nach Anspruch 2, dadurch **gekennzeichnet**, daß die Fliehgewichte (4) in Achsrichtung an einer Seite über den Synchronkörper (21) vorstehen, und daß die Ringfeder (5) in diesem vorstehenden Bereich, der als Bund (41) gestaltet ist, geführt wird.

4. Rückschaltsicherung nach Anspruch 3, dadurch **gekennzeichnet**, daß die Ringfeder (5) an beiden Federenden (53, 54) in Achsrichtung rechtwinklig abgebogen (Abbiegung 51, 52) ist und mit den abgebogenen Enden (51, 52) und einem Teil der in Umfangsrichtung sich erstreckenden Federenden (53, 54) in einer nach radial außen offenen Rille (42) der Fliehgewichte (4) gelagert und damit in axialer Richtung geführt ist.

5. Rückschaltsicherung nach Anspruch 4, dadurch **gekennzeichnet**, daß die abgebogenen Enden (51, 52) der Ringfeder (5) bis in die in Umfangsrichtung sich erstreckende Aussparungen (211) im Synchronkörper (21) hineinragen und in diesen bei hohen Drehzahlen und einer damit verbundenen großen radialen Auslenkung der Fliehgewichte (4) mit diesen zusammen gefangen werden.

6. Rückschaltsicherung nach Anspruch 5, dadurch **gekennzeichnet**, daß die axiale Führung der Fliehgewichte (4) über die Sperrstifte (3) erfolgt.

7. Rückschaltsicherung nach Anspruch 6, dadurch **gekennzeichnet**, daß der Querschnitt der Fliehgewichte (4) im axial überstehenden Bereich (Bund 41) zum Synchronkörper (21) nach radial innen und außen vergrößert ist, so daß sich für die Fliehgewichte (4) eine vergrößerte Masse ergibt.

8. Rückschaltsicherung nach Anspruch 7, dadurch **gekennzeichnet**, daß über die Anlage (43) am Synchronkörper (21) des axialen Überstandes nach radial innen und außen sich erstreckenden Bundes (41) sowie über die Sperrbolzenführungen (212) im Synchronkörper (21) ein Verkippen de Fliehgewichte (4) verhindert wird.

9. Rückschaltsicherung nach Anspruch 8, dadurch **gekennzeichnet**, daß die Fliehgewichte (4) mit den Sperrstiften (3) über die abgebogenen Enden (51, 52) der Ringfeder (5) fest verbunden sind.

10. Rückschaltsicherung nach Anspruch 9, dadurch **gekennzeichnet**, daß diese in Form der Verriegelungselemente (3, 4) in Verbindung mit einem Rückwärtsgang in einer Doppelschaltkupplung (2) angeordnet sind.

## Claims

1. The present invention concerns a downshift securing device for multiple-speed manual transmissions (1), which is located in shifting couplings with synchronizer units and which prevents a shifting coupling (2) from being shifted whenever the output part of the shifting coupling (2) is rotating at impermissibly high speeds, whereby the shifting coupling (2) comprises a synchronizing element (21) and a shift sleeve (22) mounted on the synchronizing element (21) in such a manner as to move axially but not to rotate, plus synchronizing rings (23) and coupling elements (24), whereby locking members (3, 4) are provided in the synchronizing element (21) which limit, as a function of the centrifugal force, the axial motion of the shift sleeve (22) by means of a stop (220) which is located on at least one side of the shift sleeve (22), and whereby when in their enclosed radial position, the locking members (3, 4) are held by a spring (5) in such a way that in this position, they do not project beyond the outer surface (210) of the synchronizing element (21), while, in the outside radial position produced as a result of the centrifugal force, the locking members (3, 4) block the axial motion of the shift sleeve (22) by means of their heads (31) acting through the stop (220) upon the shift sleeve (22),
**characterized** in that,
each locking member (3, 4) consists of a locking pin (3) mounted radially in the synchronizing element (21) and a segment-shaped centrifugal weight (4) which is housed in a recess (211) extending round the edge of the synchronizing element (21) in such a manner that the centrifugal weight (4) may move to a limited extent in a radial direction, that the locking pin (3) is fixedly connected to the centrifugal weight (4), and that the spring which holds the locking members (3, 4) in the enclosed radial position is an annular spring (5).

2. Downshift securing device in accordance with Claim 1, **characterized** in that,
two locking members (3, 4) are located opposite to each other inside the synchronizing element, and are held in the enclosed radial blocking position solely by means of an annular spring (5).

3. Downshift securing device in accordance with Claim 2, **characterized** in that,
the centrifugal weights (4) project beyond the synchronizing element (21) in an axial direction on one side, and that the annular spring (5) is mounted against this projecting section which is in the shape of a collar (41).

4. Downshift securing device in accordance with Claim 3, **characterized** in that,
both spring ends (53, 54) of the annular spring (5) are bent at right angles to the axial direction of the spring (bend 51, 52), and the annular spring (5) with its bent ends (51, 52) and a portion of the spring ends (53, 54) which extends around the circumference is housed within a groove (42) in the centrifugal weights (4) which is radially open towards the outside, and that the annular spring (5) is therefore mounted in an axial direction.

5. Downshift securing device in accordance with Claim 4, **characterized** in that,
the bent ends (51, 52) of the annular spring (5) extend into the recesses (211) around the outside of the synchronizing element (21), and are held within these recesses (211) in conjunction with the centrifugal weights (4) at high rotational speeds and the correspondingly considerable degree of radial displacement to which the centrifugal weights (4) are subjected.

6. Downshift securing device in accordance with Claim 5, **characterized** in that,
the centrifugal weights (4) are axially guided by means of the locking pins (3).

7. Downshift securing device in accordance with Claim 6, **characterized** in that,
the area of the cross-section of the centrifugal weights (4) in the section which projects axially (collar 41) towards the synchronizing element (21) is increased in the directions which point radially outwards and inwards, with the result that the mass of the centrifugal weights (4) is increased.

8. Downshift securing device in accordance with Claim 7, **characterized** in that,
the centrifugal weights (4) are prevented from tipping over by means of the contact surface (43) on the synchronizing element (21) due to the radial outward and inward projection of the collar (41), and by the locking pin guides (212) in the synchronizing element (21).

9. Downshift securing device in accordance with Claim 8, **characterized** in that,
the centrifugal weights (4) are fixedly connected to the locking pins (3) by means of the bent ends (51, 52) of the annular spring (5).

10. Downshift securing device in accordance with Claim 9, **characterized** in that,
the downshift securing device in the form of the locking members (3, 4) is installed in a dual shifting coupling (2) with a reverse gear.

## Revendications

1. Sécurité de descente des vitesses pour boîtes de vitesses mécaniques à plusieurs rapports (1) placée dans des embrayages avec dispositifs de synchronisation et qui empêche l'enclenchement d'un embrayage (2) lorsque la partie côté sortie de ce dernier présente des régimes dépassant les valeurs maximales admissibles, sachant que l'embrayage (2) est composé d'un corps de synchronisation (21) et d'un manchon baladeur (22) disposé sur celui-ci de façon à pouvoir être déplacé dans le sens axial mais cependant solidaire en rotation ainsi que de bagues de synchronisation (23) et corps d'embrayage (24) et que des éléments de verrouillage (3, 4) sont prévus dans le corps de synchronisation (21), lesquels limitent le déplacement axial du manchon baladeur (22) en fonction de la force centrifuge par une butée (220) située au moins sur un côté dudit manchon baladeur et sont maintenus dans leur position intérieure radiale par un ressort (5) de façon à ce que, dans cette position, ils ne dépassent pas de l'enveloppe (210) du corps de synchronisation (21) tandis que, dans leur position externe radiale provoquée par la force centrifuge, ils empêchent le déplacement axial du manchon baladeur (22) avec une partie supérieure (31) par la butée (220) sur ledit manchon baladeur (22)
**caractérisée** en ce que
chaque élément de verrouillage (3, 4) est composé d'une goupille de verrouillage (3) guidée dans le sens radial dans le corps de synchronisation (21) et d'une masselotte (4) en forme de segment, laquelle est respectivement guidée de façon à avoir une liberté de déplacement limitée dans le sens radial en un évidement (211) du corps de synchronisation (21) s'étendant dans le sens circonférentiel, que la goupille de verrouillage (3) est liée de façon fixe avec la masselotte (4) et que le ressort qui maintient les éléments de verrouillage (3, 4) en position intérieure radiale est une bague-ressort.

2. Sécurité de descente des vitesses selon la revendication 1, **caractérisée** en ce
que deux éléments de verrouillage (3, 4) sont disposés l'un en face de l'autre dans le corps de synchronisation et ne sont maintenus en position verrouillée intérieurement dans le sens radial que par une bague-ressort (5).

3. Sécurité de descente des vitesses selon la revendication 2, **caractérisée** en ce
que les masselottes (4) dépassent dans le sens axial sur un côté au-dessus du corps de synchronisation (21) et que la bague-ressort (5) est guidée dans cette zone proéminente conçue en tant qu'épaulement (41).

4. Sécurité de descente des vitesses selon la revendication 3, **caractérisée** en ce
que la bague-ressort (5) est recourbée (courbure 51, 52) à angle droit dans le sens axial aux deux extrémités du ressort (53, 54) et est logée dans une rainure (42) des masselottes (4) ouverte vers l'extérieur dans le sens radial avec les extrémités recourbées (51, 52) et une partie des extrémités de ressort (53, 54) s'étendant dans le sens circonférentiel, grâce à quoi ladite bague-ressort (5) est guidée dans le sens axial.

5. Sécurité de descente des vitesses selon la revendication 4, **caractérisée** en ce que les extrémités recourbées (51, 52) de la bague-ressort (5) avancent jusque dans les évidements (211) du corps de synchronisation (21) qui s'étendent dans le sens circonférentiel et qu'elles sont saisies dans ceux-ci en même temps qu'avec les masselottes en présence de régimes élevés et d'un déplacement radial important des masselottes (4) lié à ces régimes.

6. Sécurité de descente des vitesses selon la revendication 5, **caractérisée** en ce que le guidage axial des masselottes (4) se fait par les goupilles de verrouillage (3).

7. Sécurité de descente des vitesses selon la revendication 6, **caractérisée** en ce que la section transversale des masselottes (4) est agrandie vers l'extérieur et l'intérieur dans le sens radial en direction du corps de synchronisation (21), dans la zone faisant saillie dans le sens axial (épaulement 41), de sorte qu'il en résulte une masse plus importante pour les masselottes (4).

8. Sécurité de descente des vitesses selon la revendication 7, **caractérisée** en ce
qu'un basculement des masselottes (4) est empêché par l'appui (43) sur le corps de synchronisation (21) de la saillie axiale de l'épaulement (41) s'étendant vers l'extérieur et vers l'intérieur dans le sens radial ainsi que par les guidages de goujons de blocage (212) dans le corps de synchronisation (21).

9. Sécurité de descente des vitesses selon la revendication 8, **caractérisée** en ce que les masselottes (4) sont liées de façon fixe avec les goupilles de verrouillage (3) par les extrémités recourbées (51, 52) de la bague-ressort (5).

10. Sécurité de descente des vitesses selon la revendication 9, **caractérisée** en ce que
ces dernières sont disposées dans un embrayage double (2) sous forme d'éléments de verrouillage (3, 4) en liaison avec une marche arrière.
